# EUROPÄISCHE PATENTANMELDUNG

(11) **EP 0 624 463 A2**
(43) Veröffentlichungstag der Anmeldung: **17.11.1994**
(21) Anmeldenummer: 94106667.2
(22) Anmeldetag: 28.04.1994
(51) Int. Cl.: B32B 27/08, B65D 65/40

(54) **Flexible siegelfähige Mehrschichtfolie aus thermoplastischen Elastomeren mit innenliegender Sperrschicht**

(30) Priorität: 11.05.1993 DE 4315663
(71) Anmelder: WOLFF WALSRODE AKTIENGESELLSCHAFT, D-29699 Walsrode (DE)
(72) Erfinder: Schultze, Dirk, Dr., D-29683 Fallingbostel (DE); Hargarter, Nicole, Dipl.-Ing., D-29640 Schneverdingen (DE); Reiners, Ulrich, Dr., D-29643 Neuenkirchen (DE)
(74) Vertreter: Braun, Rolf, Dr.

(57) **Zusammenfassung**

Die vorliegende Erfindung betrifft siegelfähige, flexible, mindestens dreischichtige Mehrschichtfolien mit Außenschichten aus thermoplastischen Polyurethan und/oder Copolyetherester-Elastomeren und innenliegender Sperrschicht gegenüber fluiden Medien aus Ethylen/Vinylalkohol-Copolymeren, wobei die eingesetzten thermoplastischen Elastomere mindestens eine Shore D Härte von 35 und höchstens eine Shore-D-Härte von 72, jeweils gemessen nach DIN 53 505, besitzen und die verwendeten Ethylen/Vinylalkohol-Copolymere einen Ethylen-Anteil von 10-40 Massen-% bezogen auf die Gesamtmasse des Ethylen/Vinylalkohol-Copolymeren aufweisen.

## Beschreibung

Die vorliegende Erfindung betrifft siegelbare flexible Mehrschichtfolien, deren Kernschicht und/oder Kernschichten aus Sperrschichtpolymeren und deren Außenschichten aus thermoplastischen Elastomeren gebildet werden. Durch die hohe Sperrwirkung gegenüber organischen Flüssigkeiten, insbesondere von Kohlenwasserstoffen und Alkoholen, eignet sich die Folie für die Herstellung von verlustarmen Aufbewahrungs- und/oder Transportverpackungen insbesondere für Treibstoffe.

Für Lagerbehälter zum Aufbewahren von flüssigen umweltgefährdenden Medien bestehen gesetzliche Bestimmungen zum Schutz der Umwelt. Ein bekanntes Verfahren ist es, die Behälter in Auffangwannen zu installieren oder sie doppelwandig auszuführen, wobei der Schutz von Erdreich und Gewässern vor den gelagerten Medien im Vordergrund steht.

Hierzu gibt das DE-GM 9 109 544 einen umfassenden Überblick über die in der einschlägigen Patentliteratur genannten Ausführungsformen von Tanksystemen.

Die meisten der bekannten baulichen Maßnahmen zur Erzielung des angestrebten Schutzeffektes eignen sich wegen ihres Aufwandes nur für neu zu erstellende Tankläger. Bei älteren Tankanlagen sind vielfach keine, den neuen Vorschriften entsprechenden, Sicherheitsmaßnahmen eingebaut. Da bauliche Maßnahmen oft nicht umsetzbar sind, wird auf Schutzsysteme mit innenliegender Folienblase zurückgegriffen.

Während der Schutz von Erdreich und Gewässern, dargelegt in den Bau- und Prüfgrundsätzen für den Gewässerschutz, Teil I und II, des Instituts für Bautechnik, Reichpietschufer 74-76, 10785 Berlin 30, heute weitestgehend beherrscht wird, gilt es zunehmend auch Umweltschäden durch verdampfende Flüssigkeiten, insbesondere organischer Natur, zu verhindern bzw. zu minimieren.

Aus flexiblen Folien geformte Beutel oder größeren Behältnissen nachgeformte Blasen bzw. Innenauskleidungen bieten die Möglichkeit, lagernde Flüssigkeiten dicht zu umschließen und dabei ein Verdampfen der Flüssigkeit, sonst durch den Austausch der über der Flüssigkeit befindlichen Dampfphase möglich, zu verhindern. Besitzt die die Blase bildende Folie zusätzlich eine ausreichende Flexibilität, so kann sich die mit Lagergut gefüllte Blase dem Volumen der gelagerten Flüssigkeit anpassen, wie es beispielsweise in der deutschen Patentschrift DE 40 00 427 A1 beschrieben ist, so daß beim Befüllen und Entleeren der Tankblase zusätzlich das Verdrängen der im Gleichgewicht mit dem Lagergut befindlichen Dampfphase entfällt. In diesem Fall wird durch die Volumenänderung der Blase lediglich die nicht mit Dampf belastete Umgebungsluft verdrängt.

Die Verwendung von Kunststoffolien zur Aufbewahrung von schwersiedenden organischen Flüssigkeiten wie beispielsweise Heizölen und/oder zur Auskleidung von Behältnissen für deren Lagerung ist seit langem bekannt und findet ihren Niederschlag in den einschlägigen Handhabungshinweisen wie z.B. der Technischen Regel für brennbare Flüssigkeiten Nr. 501 (TRbF 501 "Richtlinie/Bau- und Prüfgrundsätze für Leckanzeigegeräte für Behälter") des Verbandes der Technischen Überwachungsvereine e.V. (Technische Regeln für brennbare Flüssigkeiten, 1991 erschienen im Carl Heymann Verlag, Luxemburger Straße 449, 50939 Köln 41). Für solche Einsatzgebiete werden von der TRbF 501 explizit die Baugrundsätze für Folien aus weichgestelltem Polyvinylchlorid (PVC) dargelegt. Die Beständigkeit von weichgestelltem PVC gegen eine Vielzahl organischer Lösungsmittel und Mineralölprodukte ist jedoch unbefriedigend.

Elastomere auf Kautschukbasis weisen eine unzureichende Sperrwirkung auf und können aufgrund ihres molekular vernetzten Grundgerüstes nicht immer die für die Anpassung an vorhandene Tanksysteme notwendige gestalterische Flexibilität, wie sie thermoplastische Folienmaterialien besitzen, bieten.

Thermoplastische Elastomere (TPE) zeichnen sich dagegen durch eine Kombination von guten mechanischen Eigenschaften, d.h. hoher Zug- und Weiterreißfestigkeit, hoher Dehnfähigkeit sowie Kälteflexibilität, und chemischer Beständigkeit aus. TPE sind seit langem bekannt und bestehen aus Blockcopolymeren. Die in ihrem Aufbau unterschiedlichen Blöcke oder Segmente bestimmen jeweils unterschiedliche Eigenschaften der TPE, i.a. unterscheidet man Hart- und Weichsegmente. Das Hartsegment bestimmt die Festigkeit, während das Weichsegment die Elastizität und Flexibilität bestimmt. Die unterschiedlichen Blöcke aus Hart- und Weichsegment entmischen im Festkörper, so daß dort eine Domänenstruktur zu beobachten ist.

Die Integration der verschiedenen Materialeigenschaften Festigkeit und Flexibilität in einem Molekül erreicht man durch Hintereinanderschalten verschiedener Blöcke. Diese sogenannte innere Weichmachung bewirkt, daß Elastizität bzw. Weichheit dem Kunststoff innewohnen und nicht durch eine Veränderung der Additivzusammensetzung, wie sie im Fall von Migration auftritt, beeinflußt werden.

Die Ausbildung physikalischer Netzwerke durch Aneinanderlagerung von Hartsegmenten zu Kristalliten, glasig erstarrten Domänen und/oder durch Wasserstoffbrückenbindungen bewirkt, daß diese Netzwerke thermoreversibel sind. d.h. sich diese Materialien thermoplastisch verarbeiten, formen und auch thermisch verbinden lassen.

Eine Übersicht über den Aufbau, Herstellung, Eigenschaften und Anwendungen von TPE geben Hofmann in Kunststoffe 80 (1990) 10, Legge in Rubber Chemistry and Technology 62 (1989) 529 und Goyert in Swiss Plastics 4 (1982) 7.

Werden explosionsgefährdete Medien gelagert, so besteht zusätzlich die Forderung nach antistatischer Ausstattung der verwendeten Folien, um Zündgefahren zu vermeiden. In der Technischen Regel für brennbare Flüssigkeiten Nr. 401 (TRbF 401 "Richtlinie für Innenbeschichtungen von Behältern zur Lagerung brennbarer Flüssigkeiten der Gruppe A Gefahrenklasse I, II und der Gruppe B") des Verbandes der Technischen Überwachungsvereine e.V., zu beziehen über Carl Heymans Verlag KG, Luxemburger Str. 449, 50939 Köln 41, wird u.a. erwähnt, daß Beschichtungen nicht zu Zündgefahren durch elektrostatische Aufladungen führen, wenn deren Erdableitwiderstände 10⁸ Ohm nicht überschreiten.

Die Gefahren, die bei der Entladung statischer Elektrizität entstehen, sowie mögliche Schutzmaßnahmen zu ihrer Vermeidung werden in der Richtlinie Nr. 4 der Berufsgenossenschaft der chemischen Industrie (ZH 1/200) dargelegt. Dort wird erläutert, daß bei festen Stoffen gefährliche Aufladungen dann nicht zu erwarten sind, wenn deren Oberflächenwiderstand kleiner oder gleich 10⁹ Ohm beträgt, gemessen nach DIN 53482/VDE 0303 Teil 3 im Normalklima bei 23°C und 50 % relativer Feuchte.

TPE können analog zu Massenkunststoffen durch Zuschlag- und Füllstoffe in ihren Materialeigenschaften beeinflußt werden. Für die antistatische Ausstattung von Kunststoffen hat sich die Einarbeitung von Ruß, wie von Hauf in Materialwissenschaft und Werkstofftechnik 23 (1992) 157 oder Weßling in Polymer Engineering and Science 31 (1991) 1200 erläutert, bewährt.

Materialien mit Oberflächenwiderständen >10¹³ Ohm, gemessen nach DIN 53 482, werden allgemein als isolierend, mit Widerständen <10⁵ Ohm als leitfähig bezeichnet. Materialien, deren elektrische Widerstände zwischen diesen beiden Grenzwerten liegen, werden als statische Elektrizität dissipierende oder oft auch einfach als antistatische Materialien eingeordnet.

Die Verwendung antistatischer Beschichtungen oder Deckschichten ist in der einschlägigen Patentliteratur verschiedentlich beschrieben, beispielsweise betrifft das DE-GM 1 822 483 vollsynthetische Gewebe, die durch Polyesterurethane abgedichtet sind, wobei eine leitfähige Beschichtung lediglich einseitig erfolgt. Beschichtete Gewebe weisen in der Praxis einen unerwünscht hohen Anteil an Pinholes auf, so daß bei solchen Systemen Mikroleckagen nicht auszuschließen sind. Die nur einseitige leitfähige Beschichtung ist ungenügend.

In der DE 3 103 772 A1 sind mehrschichtige Folienaufbauten beschrieben, die leitfähige TPU-Außenschichten besitzen. Die Verwendung von Weich-PVC als Kernschichtmaterial schafft eine nur ungenügende Barriere für diffundierende Treibstoff-Teilchen. Auch durch den Einsatz von härteren PVC-Typen ist die Barriere-Wirkung lediglich geringfügig zu verbessern, zusätzlich geht jedoch die Flexibilität der Folie weitestgehend verloren.

Beschichtete oder laminierte Gewebe besitzen einen deutlich heterogeneren Charakter als Folien, der nur ungern in Kauf genommen wird. Gewebelagen bergen das Risiko einer beschleunigten lateralen Diffusion in sich, so daß mögliche Materialschädigungen beschleunigt werden.

Die in der JA 52-69486 beschriebenen zweischichtigen Folienaufbauten weisen den Nachteil auf, daß nicht beide Aussenseiten gegeneinander siegeln können.

Von besonderer Bedeutung ist die Auskleidung von Behältnissen für Lagergüter mit hohen Dampfdrücken, wie sie vielfach bei explosionsgefährdeten Stoffen wie z.B. Treibstoffen auftreten. Bei diesen tritt häufig eine verstärkte Diffusion durch die für Behälterauskleidungen eingesetzten Kunststoffmaterialien auf. Die EP 0 461 836 A1 beschreibt die Notwendigkeit einer zusätzlichen Sperrschicht in polyolefinischen Materialien bei der Lagerung von Treibstoffen und schlägt den Einsatz von Polyamiden als Sperrschichtmaterialien vor.

Polyamid ist als Werkstoff für seine hohe Festigkeit und gute Beständigkeit bekannt. Eine ausführliche Übersicht über die Eigenschaften, Herstellung und Verarbeitung dieser Werkstoffgruppe läßt sich dem Kunststoff-Handbuch, Band VI, Polyamide, Vieweg, Müller (Hrsg.), Carl Hanser Verlag, München 1966 entnehmen. Die Verwendung von Polyamiden in ausreichender Wandstärke, um eine genügende Sperrwirkung zu erzielen, führt allerdings zu einer unerwünschten Verringerung der Flexibilität.

Polyamid weist zudem Sperreigenschaften auf, die für Treibstoffe nur teilweise ausreichen, wie Leaversuch in Modern Plastics International, 12 (1991) 14 ausführt.

Aus der einschlägigen Fachliteratur, wie z.B. Rellmann und Schenck in Kunststoffe 82 (1992) 729 ist bekannt, daß Sperrschichtpolymere wie Ethylen/Vinylalkohol-Copolymere (EVAl), auch als verseifte und/oder teilverseifte Ethylen/Vinylacetat-Copolymere bekannt, für die Verminderung des Lagergutverlustes bei starren Behältnissen eingesetzt werden. Die beispielsweise von Daubenbüchel. Kunststoffe 82 (1992) 201, beschriebenen Systeme eignen sich aufgrund ihres Materialaufbaus jedoch nicht für flexible Aufbewahrungsbehältnisse.

Es stellte sich daher die Aufgabe, eine Folie bereitzustellen, die sich flexibel an äußere Formen anpassen kann und gegen sich selbst siegelfähig, d.h. verschweißbar ist, so daß aus ihr flexible Behältnisse wie Beutel, Blasen oder Innenauskleidungen von Kanistern oder Tanks geformt werden können. Diese flexiblen Behältnisse sollten aus Sicherheitsgründen eine möglichst große Resistenz gegen Abrieb und Durchstich haben, um mechanischen Beeinträchtigungen der Folie beim wiederholten Befüll- und Entleerungsvorgang zuvorzukommen. Dies bedeutet, daß die Folie eine hohe Reißfestigkeit und -reißdehnung besitzen soll, während sie bei geringen Dehnungen eine ebenfalls nur geringe Spannung besitzen darf.

Weiterhin sollten die verwendeten Materialien gegen Treibstoffe beständig sein und die aus ihnen gefertigte Folie außerdem gute Sperreigenschaften gegenüber einer möglichst großen Zahl organischer Lösungsmittel besitzen.

Es galt zudem, diese Folie so herzustellen, daß sie gegen sich selbst siegelbar bzw. verschweißbar und dennoch abriebfest ist und neben einer thermischen Mindeststandfestigkeit eine hohe chemische Beständigkeit besitzt.

Die geforderte Durchlässigkeit, z.B. von bleifreiem Superbenzin, sollte 1 g/(m² 24 h), gemessen nach DIN 53 532, nicht übersteigen.

Für die Lagerung oxidationsfähiger organischer Lösungsmittel mit hohem Dampfdruck, d.h. explosionsgefährdeter Medien stellt sich zudem die Aufgabe, einen ausreichend niedrigen Oberflächenwiderstand zu realisieren, um Zündgefahren durch Entladung statischer Elektrizität auszuschließen, dieser Widerstand soll kleiner als 10⁸ Ohm, gemessen nach DIN 53 482/VDE 0303 Teil 3, Elektrodenanordnung A, betragen.

Auch eine von den Umgebungseinflüssen weitestgehend unabhängige Ausbildung der Sperreigenschaften ist als Vorteil anzusehen.

Trotz vielfältiger intensiver Anstrengungen der Fachwelt, besonders der Folien-herstellenden Kunststoffindustrie, eine solche Folie bereitzustellen, ist es bisher noch nicht gelungen, eine solche Folie der an flexiblen Sperrschicht-Folien interessierten Fachwelt bekanntzumachen.

Erfindungsgemäß gelang dies durch eine siegelbare, flexible, mindestens dreischichtige Mehrschichtfolie, aufgebaut aus Schichten verschiedener Funktionspolymere, die dadurch gekennzeichnet ist, daß sie thermoplastische Elastomere in den Außenschichten und eine EVAl Sperrschicht im Kern besitzt und die Schichten durch Coextrusion und/oder Kaschierung miteinander verbunden werden.

Die für die Herstellung von Lagerblasen, Beuteln oder Innenauskleidungen verwendbare mindestens dreischichtige Folie aus thermoplastischen Elastomeren mit einer innenliegenden Sperrschicht aus EVAl weist vorzugsweise eine Dicke von 0,05 bis 2 mm auf.

Zusätzlich zu den genannten mindestens drei Schichten kann die Folie weitere Schichten anderer Funktionspolymere enthalten, die es ermöglichen, die Eigenschaften der erfindungsgemäßen Folie weiter zu verbessern oder an spezielle Anforderungsprofile anzupassen.

Die Summe des Anteils der Aussenschichten aus thermoplastischen Elastomeren beträgt mindestens 20 % und höchstens 98 %, jeweils bezogen auf die Gesamtmasse der Folie. Bevorzugt sind Folien, in denen die Summe der Anteile der Aussenschichten mindestens 30 % und höchstens 80 %, jeweils auf die Gesamtmasse der Folie bezogen, beträgt.

In einer bevorzugten Ausführung ist die Folie symmetrisch aufgebaut, so daß sie ohne Eigenschaftsverlust und ohne Beachtung des Schichten-Aufbaus gegen sich selbst geschweißt werden kann.

Als Außenschichten sind bei der Lagerung organischer Lösungsmittel und Mineralölerzeugnisse die thermoplastischen Elastomere von besonderem Interesse, die aus hydrophilen Rohstoffen synthetisiert sind. Dieses sind die thermoplastischen Polyurethane (TPU) und Copolyetherester (PEE), da diese eine geringe Affinität zu den hydrophoben Treibstoffen auf Mineralölbasis besitzen.

Die Einlegung von armierenden Geweben in die Folie ist im allgemeinen nicht erforderlich, da durch die Verwendung reißfester Materialien, besonders der thermoplastischen Elastomeren, die mechanische Widerstandsfähigkeit und Stabilität der erfindungsgemäßen Folie in der Regel ausreichend hoch ist. Durch den Verzicht auf solche Armierungen gewinnt die erfindungsgemäße Folie an chemischer Resistenz, da das Eindringen möglicherweise schädigender Teilchen, die im Lagergut enthalten sein können, behindert wird.

Mindestens eine der siegelbaren Außenschichten kann nach Bedarf antistatisch ausgerüstet werden. Geeignete Materialien für die antistatische Ausrüstung sind leitfähige Zuschlagstoffe wie beispielsweise Ruße oder intrinsisch leitfähige Polymere oder Metallpartikel. Die Einarbeitung der leitfähigen Zuschlagstoffe in das zuvor in einen plastischen Zustand überführte TPE erfolgt mit den in der Kunststoffindustrie üblicherweise eingesetzten Maschinen, wie Knetern oder Extrudern, insbesondere Doppelschneckenextrudern.

Bei dem Einarbeiten der elektrisch leitfähigen Zuschlagstoffe konnten Verarbeitungshilfsmittel erfolgreich eingesetzt werden, die eine plastifizierende Wirkung haben und nach der Einarbeitung des Zuschlagstoffes weitestgehend aus der Polymermatrix austreten, wobei keine störenden Eigenschaftsveränderungen bestehen bleiben. Solche flüchtigen Verarbeitungshilfsmittel sind bevorzugt komprimierte Gase mit hoher weichmachender Wirkung, besonders geeignet ist hierzu beispielsweise Kohlendioxid.

Vorzugsweise werden zur antistatischen Ausrüstung Ruße mit einer nach der BET-Methode bestimmten Oberfläche von größer oder gleich 600 m²/g (ASTM D-3037) und einer durchschnittlichen Teilchengröße von weniger als 500 nm eingesetzt. Ruße, die diese Anforderungen erfüllen, sind beispielsweise als Printex XE 2 der Fa. Degussa oder Ketjenblack EC der Fa. Akzo Chemie kommerziell erhältlich. Der für die antistatische Ausrüstung bevorzugte Rußanteil liegt geeigneterweise bei 5 bis 20 %.

Da die Barriereeigenschaften von EVAl-Copolymeren sehr stark von ihrem Feuchtigkeitsgehalt bzw. dem Feuchtegehalt ihrer Umgebung abhängen, ist es von Vorteil, diese nicht als Außenschichten von Folien zu verwenden, sondern als Kernschichtbarrieren in Folienaufbauten zu integrieren.

Es gelang, wie es von Lebensmittelverpackungsfolien bekannt ist, durch die Wahl geeigneter Zwischenschichten die Barriereeigenschaften der Sperrschicht weitestgehend unabhängig von der Umgebungsfeuchte zu stabilisieren. Als besonders geeignet zur Ausbildung solcher Zwischenschichten stellten sich polyolefinische Materialien heraus. In einer bevorzugten Ausführung werden Polyethylen-Polymere verwendet.

Die Sperreigenschaften der erfindungsgemäßen Folie gegenüber einem handelsüblichen bleifreien Super-Otto-Kraftstoff sind so ausgeprägt, daß die Durchlaßrate dieser Flüssigkeit unter 1 g/(m² 24 h) liegt.

Die für die jeweiligen Schichten der erfindungsgemäßen Folie Verwendung findenden Polymer-Rohstoffe können in ihren Eigenschaften weiterhin durch den Zusatz geeigneter gebräuchlicher Additive in den jeweils wirksamen Mengen im Hinblick auf die erfindungsgemäße Anwendung verbessert werden. Hierzu können u.a. Gleit- und Schmierstoffe aber auch Farbpigmente, Biozide und anorganische Füllstoffe oder Antiblockmittel, wie beispielsweise Kieselsäure eingesetzt werden.

Als Gleitmittel werden bevorzugt Carbonsäureamide wie Erucasäureamide, Stearinsäureamide und Palmitinsäureamide oder Polydiorganylsiloxane aber auch Fluorelastomere und anorganische Gleitmittel wie Molybdändisulfid sowie aber auch Salze der Stearinsäure eingesetzt.

Geeignete Antiblockmittel sind beispielsweise mit der Folienmatrix unverträgliche organische Polymerisate oder anorganische Substanzen wie Silikate, Siliciumdioxid und Calciumcarbonat. Als besonders geeignete Antiblockmittel haben sich die anorganischen Substanzen wie Siliciumdioxid mit einer mittleren Teilchengröße von 1 bis 10 µm erwiesen. Die wirkungsvolle Zusatzmenge dieser Antiblockmittel beträgt 0,5 bis 6 Gew.-%, vorzugsweise 2 bis 4 Gew.-%, bezogen auf das mittlere Foliengewicht.

Überraschenderweise ergab sich, daß bei der elektrisch leitfähigen Ausstattung der Außenschichten der erfindungsgemäßen Folie, wobei bevorzugt der beschriebene Ruß eingesetzt wird, dessen Partikel einen Abstand-haltenden Effekt besitzen, so daß die Zugabe weiterer Antiblockmittel in dem Maße verringert werden kann, wie elektrisch leitfähige Zuschlagstoffe der Rezeptur beigefügt werden und/oder ganz unterbleiben kann.

Eine ausführliche Beschreibung gebräuchlicher Zusatzstoffe sowie ihrer Wirkungsweise kann bei Gächter und Müller, Taschenbuch der Kunststoffadditive, Carl Hanser Verlag, München 1989 nachgeschlagen werden.

Um das Eigenschaftsprofil der erfindungsgemäßen Folien auf Dauer nutzen zu können, können diese geeignete Zusätze an Stabilisatoren in jeweils wirksamen Mengen beinhalten, vorzugsweise Hydrolysestabilisatoren und/oder Photostabilisatoren und/oder Antioxidantien.

Zur Photostabilisierung eignen sich Licht-absorbierende Substanzen, insbesondere kommen energiereiches UV-Licht-absorbierende Benzoate und/oder Phenylsalicylate aber auch substituierte Acylate und Benzotriazole zum Einsatz. Außerdem lassen sich zur Photostabilisierung Quencher einsetzen, vorzugsweise sind dies Nickel-Organyl-Chelate und/oder Nickel-Dithiocarbamate.

Als Hydrolysestabilisatoren werden bevorzugt Carbodiimide, im besonderen nicht migrierende Varianten als Polycarbodiimide aber auch Hydroxyethyl-Harnstoffe verwendet.

Als Antioxidantien für den Einsatz in der erfindungsgemäßen Folie eignen sich sowohl sogenannte primäre Antioxidantien, durch Substitution am Stickstoff sterisch gehinderte sekundäre Phosphite oder Phosphonite und/oder sterisch gehinderte Phenole als auch Mischungen primärer und sekundärer Antioxidantien.

Die für die in der erfindungsgemäßen Folie zum Einsatz kommenden Kunststoffe geeigneten Stabilisatorsysteme sind beispielsweise beschrieben von Rek und Bravar in J. Elast. Plast. 12 (1980) 245.

Die Zugabe der zuzusetzenden Stoffe kann durch direktes Untermischen bei der Polymerherstellung oder auch über den der gewünschten Dosierung entsprechenden Zusatz eines Masterbatches bzw. eines den Zuschlagstoff enthaltenden Flüssig- oder Polymerkonzentrates erfolgen.

Alle für die erfindungsgemäße Folie eingesetzten Polymermaterialien lassen sich auf den üblichen Kunststoffverarbeitungsmaschinen wie z.B. Extrudern verarbeiten. Zur Ausbildung der Folien bieten sich die allgemein verbreiteten Werkzeuge wie Flachfilmdüsen mit nachgeschalteter Gießwalze oder nachgeschaltetem Auftragswerk sowie Blasfolienköpfe in Kombination mit einer geeigneten Flachlegung an.

Für die Zusammenführung der Schichten lassen sich dafür geschaffene Werkzeuge, beispielsweise Coextrusionsdüsen einsetzen. Ist eine direkte Verarbeitung zweier unterschiedlicher, in der erfindungsgemäßen Folie notwendigerweise einzusetzender Materialien aufgrund eines stark differierenden Verarbeitungsverhaltens in einem einzigen Coextrusionswerkzeug nicht möglich, so können die Schichten auch nachträglich durch thermisches Kaschieren, z.B. in einer Flammkaschierungsapparatur oder durch Kaschieren unter Einsatz eines geeigneten Klebstoffsystems sowie auch durch eines der üblichen sonstigen Laminierverfahren miteinander verbunden werden.

In einer bevorzugten Ausführung werden zum Laminieren unterschiedlicher Folienbahnen Polyurethan-Klebstoffe eingesetzt, wobei Klebstoffsysteme Anwendung finden, die eine starke molekulare Vernetzung aufweisen, so daß sie von migrierenden Molekülen der Lagermedien nur in geringem Maße angequollen aber nicht gelöst werden.

Die Haftung der Schichten untereinander kann, falls erforderlich, durch den Einsatz von haftvermittelnden Komponenten deutlich erhöht werden.

An derartigen haftvermittelnden Substanzen besteht eine große Auswahl an Typen, die kommerziell verfügbar sind. Es handelt sich meist um Copolymerisate mit mindestens zwei verschiedenen Comonomeren, es sind aber auch Multipolymerisate mit mehr als fünf verschiedenen Comonomeren im Einsatz.

Ein bevorzugtes Comonomer der haftvermittelnden Komponente ist vor allem das olefinische Ethylen, welches eine Haftungsverbesserung in Bezug auf unpolare Polymere bewirkt. Daneben wird das Maleinsäureanhydrid in ebenfalls bevorzugter Weise in haftvermittelnde Komponenten eingebaut. Dieses bewirkt aufgrund der Anhydrid-Funktion eine starke Bindung an polare, besonders an protische Gruppen. Außerdem werden vielfach Vinylacetate, Acrylate, Methacrylate und Butylacrylate als Säuregruppen-haltige Comonomere eingesetzt, die aufgrund ihrer polaren organischen Molekülstruktur haftvermittelnd wirken, wobei die Butylacrylate bevorzugte Comonomere sind.

Bei der Verwendung von Maleinsäureanhydrid enthaltenden haftvermittelnden Komponenten wird oftmals eine Verbundhaftung festgestellt, die sich mit der Lagerzeit der Folie verbessert, was durch molekulare Umsetzungen erreicht wird, die während des Verarbeitungsprozesses einsetzen, aber durch ihren langsamen Verlauf erst später das angestrebte Niveau der haftvermittelnden Wirkung erreichen.

Die erfindungsgemäße Folie kann ein- oder beidseitig in ihren Oberflächeneigenschaften modifiziert werden. Hierzu eignen sich insbesondere übliche Corona-, Plasma- oder Fluorbehandlungen. Mit letzteren ließen sich auch die Sperreigenschaften der erfindungsgemäßen Folie optimal an die zu erwartenden Kontaktmedien der Folie anpassen bzw. weiter verbessern.

Solche Verfahren zur Oberflächenbehandlung von Kunststoffolien werden beispielsweise von Dorn und Wahono in Maschinenmarkt 96 (1990) 34-39 oder Milker und Möller in Kunststoffe 82 (1992) 978-981 ausführlich dargestellt.

Im folgenden wird die Erfindung anhand von Beispielen und Vergleichsbeispielen noch näher erläutert.

### Beispiel 1

Aus einem TPU mit einem aus Tetrahydrofuran aufgebauten Poly(oxytetramethylen)diol-Weichsegment sowie einem aus 4,4'-Diisocyanatodiphenylmethan (MDI) und Butandiol gebildeten Hartsegment der Shore-A-Härte 86 wurde durch Coextrusion mittels eines Dreischichtwerkzeuges eine symmetrisch aufgebaute Folie erhalten, deren Kernschicht von einem Ethylen-Vinylalkohol-Copolymerisat (EVAl) gebildet wurde. Das verwendete EVAl hatte einen Ethylenanteil von 38 Gew.-%, bezogen auf die Gesamtmasse des eingesetzten EVAl. Bei diesem Ethylen-Anteil besitzt das EVAl eine nur geringe Sperrwirkung, kann aber aufgrund der ähnlichen Verarbeitungstemperaturen direkt mit dem TPU gemeinsam verarbeitet werden.

Die Außenschichten der Blasfolie hatten eine mittlere Dicke von jeweils 90 µm und die Kernschicht hatte eine mittlere Dicke von 20 µm.

### Beispiel 2

Ein TPU wurde mit 10 % eines Rußes mit hoher Oberfläche, Ketjenblack EC 600, leitfähig ausgerüstet. Das TPU, dessen Weichsegment aus Adipinsäure und Hexamethylendiol aufgebaut war und ein aus MDI und Butandiol gebildetes Hartsegment besaß, hatte eine Shore-A-Härte von 93 bzw. eine Shore-D-Härte von 47. Hierbei war der Einsatz von Amidwachsen zur Einarbeitung des Rußes nötig. Das leitfähige TPU wurde in einem Dreischichtwerkzeug mit einem Haftvermittler und einem EVAl zu einem asymmetrischen Verbund verarbeitet.

Das EVAl hatte einen Ethylenanteil von 32 Gew.-%, bezogen auf die Gesamtmasse des EVAl. Als haftvermittelnde Komponente wurde ein Copolymer aus Ethylen, Butylacrylat und Maleinsäureanhydrid eingesetzt. Der Ethylen-Anteil wurde durch ein LLDPE gebildet.

Die TPU-Schicht hatte eine Dicke von 90 µm, die haftvermittelnde und die EVAl-Schicht hatten eine jeweilige Dicke von 10 µm.

Mit einem Infrarot-Wärmestrahler ließen sich in einem weiteren Verarbeitungsschritt die Oberflächen der EVAl-Schichten aufschmelzen und unter Zusammenführung zweier Bahnen zu einer symmetrischen Folie zusammenfügen, die eine EVAl-Kernschicht, umgeben von Haftvermittler-Schichten, und TPU-Außenschichten besaß.

### Beispiel 3

In ein plastifiziertes PEE-Rohmaterial der Shore-D-Härte 60, bestehend aus Hartsegmenten, die aus Terephthalsäure und Ethylenglykol gebildet waren, und Weichsegmenten aus Poly(oxytetramethylen)diol wurde ein Anteil von 8 Gew.-% an leitfähigem Ruß, Ketjenblack EC 600, bezogen auf die Gesamtmasse des erhaltenen Compounds, in einem Knetwerkzeug eincompoundiert. Bei der Compoundierung wurde auf den Einsatz von Plastifizierhilfsstoffen verzichtet, die an die Folienoberfläche migrieren können. Aus diesem Compound wurde, ebenso wie aus von einem EVAl mit einem Ethylenanteil von 29 Gew.-%, bezogen auf die Gesamtmasse des eingesetzten EVAl, eine Einschichtblasfolie durch Extrusion hergestellt. PEE und EVAl wiesen Verarbeitungstemperaturen auf, die um mehr als 30°C auseinanderlagen, so daß die Verarbeitung nicht direkt in einem Werkzeug erfolgen konnte. Der Sperrschichtverbund wurde durch Klebstofflaminierung der PEE-Folien auf die beiden Seiten der EVAl-Folie erhalten. Hierzu wurde in einem gängigen Kaschierwerk ein vernetzender Polyurethan-Klebstoff, gelöst in einem organischen polaren, nichtprotischen Lösungsmittel, aufgetragen und die Folien unter Aufbringung von Druck und Temperatur miteinander verbunden.

Die Schichtdicke der eingesetzten leitfähig ausgerüsteten PEE-Folien betrug im Mittel 100 µm, die des verwendeten EVAl-Films im Mittel 15 µm.

### Beispiel 4

Ein leitfähiges Polyurethan, hergestellt analog zu Beispiel 2, wurde in einem Coextrusions-Blasfolien-Werkzeug mit einem TPU, dessen Weichsegment aus Adipinsäure und Hexamethylendiol aufgebaut war, sowie einem aus MDI und Butandiol gebildeten Hartsegment, der Shore-A-Härte 96 bzw. der Shore-D-Härte 54 zu einer Zweischicht-TPU-Folie, deren Schichten eine Dicke von jeweils 50 µm hatten, verarbeitet.

Als Sperrschichtfolie wurde eine aus Polyamid-6 und EVAl erhaltene, ebenfalls coextrudierte Dreischicht-Folie eingesetzt, die Außenschichten aus Polyamid und eine Kernschicht aus EVAl hatte. Diese symmetrische Sperrschichtfolie hatte eine Dicke von 15 µm, wobei die Dicke der EVAl-Schicht 2 µm und die der sie einschließenden Polyamid-Schichten je 6,5 µm betrug.

Erfindungsgemäße Folien mit einer Dicke von 220 µm ließen sich unter Einsatz eines vernetzenden Polyurethan-Klebstoffes erhalten, wobei auf die Sperrschicht-Folie beidseitig die oben beschriebenen TPU-Zweischichtfolien laminiert wurden. Dies geschah derart, daß die mit Ruß leitfähig ausgerüsteten Schichten die Außenlagen des fertigen Folienverbundes bildeten.

### Beispiel 5

In einem Dreischicht-Coextrusions-Blasfolien-Werkzeug wurde eine Folie hergestellt, in deren Kern sich eine haftvermittelnde Komponente mit einer Schichtdicke von 10 µm befand. Eine der jeweils 50 µm dicken Außenseiten bestand aus einem leitfähigen TPU, dessen Weichsegment aus Adipinsäure und Hexamethylendiol aufgebaut war und das ein aus MDI und Butandiol gebildetes Hartsegment besaß. Die Shore-A-Härte des TPU betrug 93 bzw. die Shore-D-Härte 47. Die ebenfalls 50 µm dicke andere Außenseite bestand aus einem linearen Polyethylen niedriger Dichte von 0,935 g/cm³ und einem MFI von 0,5, gemessen bei 190°C mit einem Prüfgewicht von 2,16 kg.

Als Sperrschicht wurde eine aus Polyamid-6 und EVAl erhaltene, coextrudierte Dreischicht-Folie eingesetzt, die als symmetrische Folie Außenschichten aus Polyamid und eine Kernschicht aus EVAl hatte (vgl. Beispiel 4). Diese Sperrschichtfolie hatte eine Dicke von 80 µm, wobei die Dicke der EVAl-Schicht 6 µm und die der sie einschließenden Polyamid-Schichten je 37 µm betrug.

Erfindungsgemäße Folien ließen sich unter Einsatz eines vernetzenden Polyurethan-Klebstoffes erhalten, wobei auf die Sperrschicht-Folie beidseitig die erstgenannten Dreischichtfolien laminiert wurden. Die Klebstofflaminierung der erstgenannten Dreischicht-Folien auf die Sperrschicht-Folie erfolgte an den nicht leitfähig ausgerüsteten Schichten aus Polyethylen niedriger Dichte, so daß die Außenlagen des fertigen Folienverbundes aus mit Ruß ausgerüsteten TPU-Schichten gebildet wurden.

### Vergleichsbeispiel 1

Eine Folie wurde aus einem kommerziell erhältlichen thermoplastischen Polyurethan mit einem elastischen Ethersegment unter Aufschmelzen durch Extrusion und anschließendes Gießen auf eine Kühlwalze hergestellt. Das TPU hatte ein aus Tetrahydrofuran aufgebautes Poly(oxytetramethylen)diol-Weichsegment sowie ein aus MDI und Butandiol gebildetes Hartsegment. Das verwendete Polyurethan hatte eine Shore-A-Härte von 85. Zugesetzt wurden 2 % Siliciumdioxid und 0.4 % Amidwachs, jeweils bezogen auf die Gesamtmenge der Folie, als Verarbeitungshilfsmittel. Die hier beschriebene Folie hatte eine Dicke von 400 µm.

### Vergleichsbeispiel 2

In ein TPU der Shore-A-Härte 93 bzw. der Shore-D-Härte 47 wurde ein elektrisch leitfähiger Ruß mit hoher Oberfläche, Ketjenblack EC, unter Verwendung eines Knetwerkzeuges eingearbeitet. Das TPU war durch ein Weichsegment aus Adipinsäure und Hexamethylendiol sowie ein aus MDI und Butandiol gebildetes Hartsegment charakterisiert. Zur schonenden Plastifizierung war die Zugabe von Amidwachsen bei der Einarbeitung nötig. Eine 200 µm dicke Folie wurde durch Blasfolienextrusion erhalten.

### Vergleichsbeispiel 3

Als weitere Vergleichsfolie wurde eine auf einem Kalandrierwerkzeug hergestellte Folie aus einem weichgestellten PVC verwendet. Die Flexibilisierung wurde durch Zugabe von 20 Gew.-% Dioctylphthalat, bezogen auf die Gesamtmasse der Folie, erreicht. Diese Vergleichsfolie hatte eine Dicke von 300 µm.

### Vergleichsbeispiel 4

Ein PEE-Rohmaterial der Shore-D-Härte 60, bestehend aus Hartsegmenten, die aus Terephthalsäure und Tetramethylenglykol gebildet sind, und dessen Weichsegmente aus Poly(oxytetramethylen)diol aufgebaut sind, wurde unter Verwendung eines Extruders aufgeschmolzen. Mittels eines Blasfolienkopfes wurde aus der Schmelze ein Folienschlauch gezogen. Die nach Flachlegung, Randbeschnitt und Trennung erhaltene Folie hatte eine Dicke von 200 µm.

**Tabelle**

| Tabelle 1 | Benzindurchlässigkeit g/(m² 24 h) | elektrischer Oberflächenwiderstand Ohm | Reißfestigkeit N/mm² | Reißdehnung % | Erweichungspunkt °C |
|---|---|---|---|---|---|
| Beispiel 1 | 0,2 | 3^{**.**}10¹² | 55,2 | 360 | 143 |
| Beispiel 2 | <0,1 | 6^{.}10⁵ | 51,1 | 550 | 135 |
| Beispiel 3 | <0,1 | 7^{.}10⁶ | 27,6 | 480 | 157 |
| Beispiel 4 | 0,2 | 6^{**.**}10⁵ | 29,2 | 590 | 135 |
| Beispiel 5 | 0,1 | 5^{**.**}10⁵ | 23,1 | 690 | 148 |
| Vergleichsbeispiel 1 | 10,4 | 3^{**.**}10¹² | 72,0 | 480 | 140 |
| Vergleichsbeispiel 2 | 16,3 | 6^{**.**}10⁵ | 39,1 | 440 | 174 |
| Vergleichsbeispiel 3 | 33,8 | 6^{**.**}10¹⁴ | 12,5 | 170 | 74 |
| Vergleichsbeispiel 4 | 7,6 | 5^{**.**}10¹² | 36,1 | 645 | 157 |

Aus der Gegenüberstellung der Beispiele und Vergleichsbeispiele ist eindeutig ersichtlich, daß die erfindungsgemäßen Folien den Vergleichsfolien hinsichtlich des gewünschten Eigenschaftsbildes überlegen sind.

### Bestimmung der Benzindurchlässigkeit

Die Durchlässigkeit der Folien für Benzin wird gemäß DIN 53 532 "Bestimmung der Durchlässigkeit von Elastomerfolien für Flüssigkeiten" bestimmt. Sie erfolgt nach DIN 50 014 bei einer Temperatur von 23°C in Umgebungsluft mit einer relativen Feuchte von 50 % (Normalklima 23/50). Als Benzin wird ein handelsüblicher unverbleiter Super-Ottokraftstoff entsprechend DIN 51 607/EN 228 verwendet.

### Messung des elektrischen Oberflächenwiderstandes

Die Messung des elektrischen Oberflächenwiderstandes erfolgt nach DIN 53 482/VDE 0303 Teil 3 im Normalklima 23/50. Es wird die Elektrodenanordnung A, bestehend aus zwei federnden parallelen 100 mm langen Elektroden im Abstand von 10 mm verwendet.

### Bestimmung der Reißfestigkeit und -dehnung

Reißfestigkeit und -dehnung werden nach DIN 53 455 ermittelt. Die Umgebungsbedingungen entsprechen dem Normalklima 23/50. Es sind Prüfstreifen mit einer Einspannlänge von 50 mm zu verwenden.

### Bestimmung des Erweichungsbereiches

Der Erweichungsbereich wird auf der Kofler-Heizbank bestimmt. Hierzu wird ein 30 x 200 mm großer Folienstreifen auf die zuvor kalibrierte Kofler-Heizbank gelegt. Nach einer Wartezeit von 30 Sekunden wird dieser, ausgehend von dem Bereich niedrigerer Temperatur, abgezogen. Der Bereich, in dem die Folie an der Oberfläche der Kofler-Heizbank haften bleibt, gibt den Erweichungsbereich an.

## Patentansprüche

1. Siegelfähige, flexible, mindestens dreischichtige Mehrschichtfolien mit Außenschichten aus thermoplastischem Polyurethan und/oder Copolyetherester-Elastomeren und innenliegender Sperrschicht gegenüber fluiden Medien aus Ethylen/Vinylalkohol-Copolymeren, dadurch gekennzeichnet, daß die eingesetzten thermoplastischen Elastomere mindestens eine Shore-D-Härte von 35 und höchstens eine Shore-D-Härte von 72, jeweils gemessen nach DIN 53 505, besitzen und die verwendeten Ethylen/Vinylalkohol-Copolymere einen Ethylen-Anteil von 10-40 Massen-% bezogen auf die Gesamtmasse des Ethylen/Vinylalkohol-Copolymeren aufweisen.

2. Mehrschichtfolie nach Anspruch 1, dadurch gekennzeichnet, daß die Folie zwischen der Außenschicht aus thermoplastischen Elastomeren und der Sperrschicht aus Ethylen/Vinylalkohol-Copolymeren mindestens eine zusätzliche Schicht mindestens eines weiteren thermoplastisch verarbeitbaren Polymeren enthält, bevorzugt Polyamide und/oder Polyolefine.

3. Mehrschichtfolie nach den Ansprüchen 1 und/oder 2, dadurch gekennzeichnet, daß zur Verbesserung bzw. Herstellung der Verbundhaftung reaktive Klebstoffsysteme, bevorzugt Polyurethan-Klebstoffe oder haftvermittelnde Copolymere eingesetzt werden.

4. Mehrschichtfolie nach einem der Ansprüche 1 bis 3, dadurch gekennzeichnet, daß die Folie einen symmetrischen Aufbau hinsichtlich der Lage der einzelnen Schichten bezogen auf die geometrische Mitte der Folie aufweist.

5. Mehrschichtfolie nach einem der Ansprüche 1 bis 4, dadurch gekennzeichnet, daß mindestens eine der Außenschichten aus thermoplastischen Elastomeren leitfähige Additive enthält, so daß ihr elektrischer Oberflächenwiderstand, gemessen nach DIN 53 482, Elektrodenanordnung A, höchstens 10⁹ Ohm beträgt.

6. Folie nach einem der Ansprüche 1 bis 5, dadurch gekennzeichnet, daß sie eine Gesamtdicke von 50 bis 2000 µm, bevorzugt von 200 bis 800 µm aufweist.

7. Folie nach einem der Ansprüche 1 bis 6, dadurch gekennzeichnet, daß die Summe der Schichtdicken der Außenschichten einen Anteil von 20 % bis 98 %, bevorzugt 30 % bis 80 % an der Gesamtschichtdicke der Folie hat.

8. Verwendung der Mehrschichtfolie nach einem der Ansprüche 1 bis 7, dadurch gekennzeichnet, daß die Folie zur Ausbildung flexibler Behältnisse und/oder flexibler Blasen für die Innenauskleidung von formstabilen Behältnissen eingesetzt wird.

9. Verwendung der Mehrschichtfolie nach Anspruch 8, dadurch gekennzeichnet, daß die Folie als zusätzliche Hülle und Dampfsperre bei der Lagerung brennbarer Flüssigkeiten eingesetzt wird.

10. Verwendung einer Folie nach den Ansprüchen 8 und 9, dadurch gekennzeichnet, daß die Folie für die Ausbildung von Hüllen zur Lagerung von Otto-Kraftstoffen verwendet wird.
